# EUROPEAN PATENT APPLICATION

(11) **EP 3 663 908 A1**
(43) Date of publication of application: **10.06.2020**
(21) Application number: 18841279.5
(22) Date of filing: 19.04.2018
(51) Int. Cl.: G06F 8/34, G06F 3/0484, G06F 11/32, G06T 19/00

(54) **INFORMATION PROCESSING DEVICE, INFORMATION PROCESSING METHOD, INFORMATION PROCESSING SYSTEM, PROGRAM MANUFACTURING METHOD, AND PROGRAM**

(30) Priority: 02.08.2017 JP 2017150010
(71) Applicant: Sony Corporation, Tokyo 108-0075 (JP)
(72) Inventor: YAJIMA, Takumi, Tokyo 108-0075 (JP); KONAMI, Shuichi, Tokyo 108-0075 (JP); ABE, Takashi, Tokyo 108-0075 (JP); KATO, Norito, Tokyo 108-0075 (JP)
(74) Representative: MFG Patentanwälte Meyer-Wildhagen Meggle-Freund Gerhard PartG mbB
(86) International application number: PCT/JP2018/016112
(87) International publication number: WO 2019/026357

(57) **Abstract**

[Object] To enable a user to easily grasp a state of a computer program and to easily perform a process of changing the computer program, using a three-dimensional object.

[Solving Means] An information processing apparatus includes an output section and a controller. The output unit is configured to output data indicating a predetermined three-dimensional object having a face on which at least a portion of a computer program that runs on a computer is displayed. The controller is configured to instruct, according to a predetermined operation, the computer to perform a change in the computer program, the predetermined operation being performed by a user with respect to the three-dimensional object.

## Description

### Technical Field

The present technology relates to an information processing apparatus, an information processing method, an information processing system, a program production method, and a program that make it possible to perform, in the process of development of a computer program, processing regarding, for example, a modification to a program.

### Background Art

In related art, there exist technologies that support the process of development of a computer program. For example, Patent Literature 1 described below discloses that a debugger of an application program collects every state of a colonel, an interrupt handler, and respective tasks; arranges a plurality of objects in a virtual three-dimensional space on a screen; and allocates the collected pieces of information to respective properties of a shape, a size, and a color of each of the plurality of objects, and to a property indicating the behavior of each of the plurality of objects in the three-dimensional space.

### Citation List

### Patent Literature

Patent Literature 1: Japanese Patent Application Laid-open No. 10-261109

### Non-Patent Literature

### Disclosure of Invention

### Technical Problem

However, the technology disclosed in Patent Literature 1 enables a user (a programmer) to intuitively grasp, for example, a state of a task of a computer program in a three-dimensional space, but does not enable the user to directly operate and change the computer program in the three-dimensional space using the grasped information.

In view of the circumstances described above, it is an object of the present technology to provide an information processing apparatus, an information processing method, an information processing system, a program production method, and a program that enable a user to easily grasp a state of a computer program and to easily perform an operation of changing the computer program, using a three-dimensional object.

### Solution to Problem

In order to achieve the object described above, an information processing apparatus according to an embodiment of the present technology includes an output section and a controller. The output unit is configured to output data indicating a predetermined three-dimensional object having a face on which at least a portion of a computer program that runs on a computer is displayed. The controller is configured to instruct, according to a predetermined operation, the computer to perform a change in the computer program, the predetermined operation being performed by a user with respect to the three-dimensional object.

Accordingly, using the three-dimensional object, the information processing apparatus enables the user to intuitively and easily grasp a state of the computer program, and to easily perform a change operation for optimizing the computer program. Here, the computer may be a personal computer (PC), a smartphone, a tablet terminal, a smartwatch and other wearable terminals, a camera, a game device, a TV device, a personal video recorder (PVR), an audio player, an electronic book, and any other apparatuses.

The controller may control the output unit to output, together with the data indicating the three-dimensional object, data indicating an operation method for changing the computer program.

Accordingly, the information processing apparatus enables the user to grasp the operation method and to change the computer program easily.

The controller may control the output unit to output the data indicating the three-dimensional object in a three-dimensional space that is a space in which an operation is performed by the user.

Accordingly, the information processing apparatus enables the user to grasp the computer program more intuitively and to input an operation of the change.

The controller may recognize a predetermined gesture of the user as the operation, and may give, according to the gesture, an instruction to perform the change.

Accordingly, the information processing apparatus enables the user to more intuitively input the operation of the change.

The controller may instruct the computer to start to run the computer program, and may analyze running data of the computer program to generate analysis data, the running data being received from the computer.

In this case, the controller may control the output unit such that the computer program is displayed on a first face of the three-dimensional object, and the running data or the analysis data is displayed on a second face of the three-dimensional object, the second face being different from the first face.

Accordingly, the information processing apparatus enables the user to grasp, together with (code of) the computer program, a running condition of the computer program or an analysis result on the different faces of the three-dimensional object.

The three-dimensional object may have a structure including at least one rectangular parallelepiped stacked in a predetermined direction. In this case, the controller may control the output unit such that the computer program is displayed on one of two faces from among faces of the rectangular parallelepiped, and the running data or the analysis data is displayed on one of four lateral faces from among the faces of the rectangular parallelepiped, the two faces being orthogonal to the predetermined direction, the four lateral faces being parallel to the predetermined direction.

Accordingly, the information processing apparatus enables the user to intuitively grasp the computer program, and the running condition of the computer program or an analysis result through different faces of the stacked rectangular parallelepiped object.

The stacked rectangular parallelepiped may correspond to a single loop process of the computer program. In this case, the controller may control the output unit such that data indicating an execution time for the single loop process is displayed on the one of four lateral faces as the running data or the analysis data.

Accordingly, the information processing apparatus enables the user to intuitively grasp a loop structure included in the computer program and an execution time for it through the different faces of the rectangular parallelepiped object.

The controller may determine whether a change process performed with respect to the computer program is possible, the controller performing the determination with respect to a plurality of the change processes different from one another, and the controller may control the output unit to output, as the operation method, data indicating an operation method for the change process determined to be possible.

Accordingly, the information processing apparatus determines whether the plurality of the different change processes performed with respect to the computer program is possible and clearly specifies an operation method only for a possible change process. This enables the user to intuitively grasp which change process is possible, and makes it possible to avoid user's unproductive consideration with respect to an impossible change process.

The controller may give, according to an operation of the user, an instruction to perform the change in the computer program, the operation of the user corresponding to the operation method for the change process determined to be possible, and the controller may control the output unit such that the three-dimensional object is deformed to be displayed according to a result of the change.

Accordingly, the information processing apparatus causes the three-dimensional object to be deformed to be displayed according to a result of the change based on an operation of the user, the operation of the user giving an instruction to perform one of the plurality of the change processes. This makes it possible to give feedback to the user regarding the operation.

The change process may be one of splitting, parallelization, unrolling, vectorization, or reordering of the computer program.

These change processes can be performed in a programing language such as "Halide", but are not limited to this.

The three-dimensional object may be in a form of a book. In this case, the controller may control the output unit to output an image of a bookshelf in which a plurality of the three-dimensional objects is arranged in a three-dimensional space such that the second face corresponds to a backbone of the book.

Accordingly, the information processing apparatus depicts the computer program in the form of a book, and arranges the books in a bookshelf such that the user understands the running condition of the computer program or an analysis result at once. This enables the user to easily grasp a tuning-target program.

When the controller detects a user's operation of selecting one of the plurality of the three-dimensional objects arranged in the bookshelf, the controller may set, to be a target of the change, the computer program displayed on the first face of the selected three-dimensional object.

Accordingly, the information processing apparatus enables the user to easily select a tuning-target program.

The controller may analyze an execution time for the computer program as the running data, and may control the output unit such that the second face having an area corresponding to a length of the execution time is displayed.

Accordingly, the information processing apparatus enables the user to intuitively grasp an execution time for the computer program using the area of a backbone of the book virtually arranged in the bookshelf, and to select a tuning-target computer program.

An information processing system according to another embodiment of the present technology includes a computer and an information processing apparatus. The computer includes a storage and a first controller, and the information processing apparatus includes an output unit and a second controller. The storage is configured to store therein a computer program, and the first controller is configured to change the computer program. The output unit is configured to output data indicating a predetermined three-dimensional object having a face on which at least a portion of the computer program is displayed, and the second controller is configured to instruct, according to a predetermined operation, the computer to perform a change in the computer program, the predetermined operation being performed by a user with respect to the three-dimensional object.

An information processing method according to another embodiment of the present technology includes:
outputting data indicating a predetermined three-dimensional object having a face on which at least a portion of a computer program that runs on a computer is displayed; and
instructing, according to a predetermined operation, the computer to perform a change in the computer program, the predetermined operation being performed by a user with respect to the three-dimensional object.

A computer program production method according to another embodiment of the present technology includes:
outputting data indicating a predetermined three-dimensional object having a face on which at least a portion of a computer program that runs on a computer is displayed; and
instructing, according to a predetermined operation, the computer to perform a change in the computer program, the predetermined operation being performed by a user with respect to the three-dimensional object.

A program according to another embodiment of the present technology causes an information processing apparatus to perform a process including:
outputting data indicating a predetermined three-dimensional object having a face on which at least a portion of a computer program that runs on a computer is displayed; and
instructing, according to a predetermined operation, the computer to perform a change in the computer program, the predetermined operation being performed by a user with respect to the three-dimensional object.

### Advantageous Effects of Invention

As described above, the present technology enables a user to easily grasp a state of a computer program and to easily perform an operation of changing the computer program, using a three-dimensional object. However, this effect does not limit the present technology.

### Brief Description of Drawings

[Fig. 1] Fig. 1 illustrates a configuration of a computer-program development system according to an embodiment of the present technology.
[Fig. 2] Fig. 2 illustrates a hardware configuration of a program development server included in the computer-program development system.
[Fig. 3] Fig. 3 is a flowchart of a procedure of an operation of the computer-program development system.
[Fig. 4] Fig. 4 illustrates an example of a three-dimensional object used to develop a computer program being displayed by the program development server.
[Fig. 5] Fig. 5 illustrates a method for operating the three-dimensional object used to develop a computer program.
[Fig. 6] Fig. 6 illustrates an example of displaying an iteration object taken out of the three-dimensional object used to develop a computer program.
[Fig. 7] Fig. 7 illustrates an example of displaying an iteration object taken out of the three-dimensional object used to develop a computer program.
[Fig. 8] Fig. 8 illustrates an example of displaying an iteration object taken out of the three-dimensional object used to develop a computer program.
[Fig. 9] Fig. 9 illustrates an example of displaying an iteration object taken out of the three-dimensional object used to develop a computer program.
[Fig. 10] Fig. 10 illustrates an example of displaying an iteration object taken out of the three-dimensional object used to develop a computer program.
[Fig. 11] Fig. 11 illustrates an example of displaying an iteration object taken out of the three-dimensional object used to develop a computer program.
[Fig. 12] Fig. 12 illustrates an example of displaying the three-dimensional object according to another embodiment of the present technology.
[Fig. 13] Fig. 13 illustrates an example of displaying the three-dimensional object according to another embodiment of the present technology.
[Fig. 14] Fig. 14 illustrates an example of displaying the three-dimensional object according to another embodiment of the present technology.

### Mode(s) for Carrying Out the Invention

Embodiments according to the present technology will now be described below with reference to the drawings.

### [Outline of System]

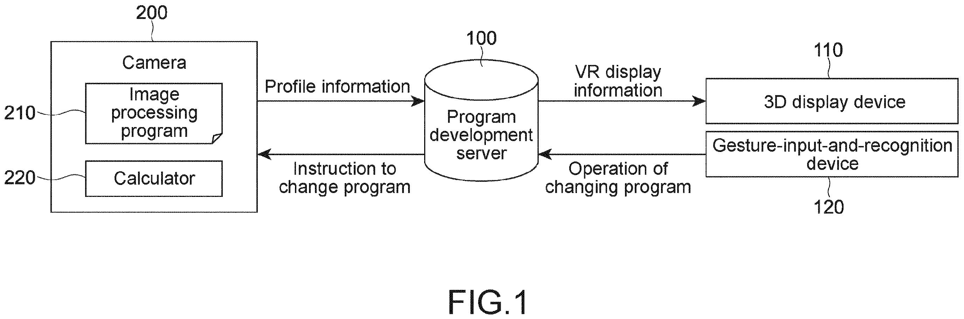

Fig. 1 illustrates a configuration of a computer-program development system according to an embodiment of the present technology.

As illustrated in the figure, the system includes a program development server 100, a 3D display device 110, a gesture-input-and-recognition device 120, and a camera 200.

The program development server 100 is connected to the 3D display device 110 and the gesture-input-and-recognition device 120 as well as to the camera 200 through a wired or wireless communication interface.

The camera 200 is an example of a tuning-target computer, and includes a storage such as a flash memory that stores therein an image processing program 210 that is an example of a computer program, and a calculator 220 that can execute the image processing program 210.

Examples of the 3D display device 110 include a virtual reality (VR) device such as a head-mounted display and VR glasses, and the 3D display device 110 is worn by a user. Examples of the gesture-input-and-recognition device 120 include a camera and other sensors.

The program development server 100 performs processing that occurs in a program development environment, the processing including a change in the image processing program 210, building of the image processing program 210, and a calculation necessary to analyze a profile of the image processing program 210, the image processing program 210 being executed in the camera 200 described above.

Specifically, using the 3D display device 110, the program development server 100 can display at least a portion of the image processing program 210 on a predetermined face of a three-dimensional object in a three-dimensional VR space.

Then, during the three-dimensional display of the image processing program 210, the program development server 100 transmits, to the camera 200, an instruction to change the image processing program 210, according to a user's gesture that is recognized by the gesture-input-and-recognition device 120.

Further, the program development server 100 instructs the camera 200 to execute (to start to run) the image processing program 210, and receives, from the camera 200, static-and-dynamic-profile information regarding the image processing program 210 or the calculator 220 at the time of execution of the image processing program 210 performed by the calculator 220. Then, the program development server 100 arranges, on the three-dimensional object, the profile information or information regarding a result obtained by further analyzing the profile information, and outputs the profile information or the information regarding the analysis result to the 3D display device 110 as VR display information so that the 3D display device 110 displays the VR display information.

The program development server 100 can cause the 3D display device 110 to display the image processing program 210 together with the profile information received from the camera 200, or can cause the 3D display device 110 to switch between the image processing program 210 and the received profile information to perform display.

### [Hardware Configuration of Program Development Server]

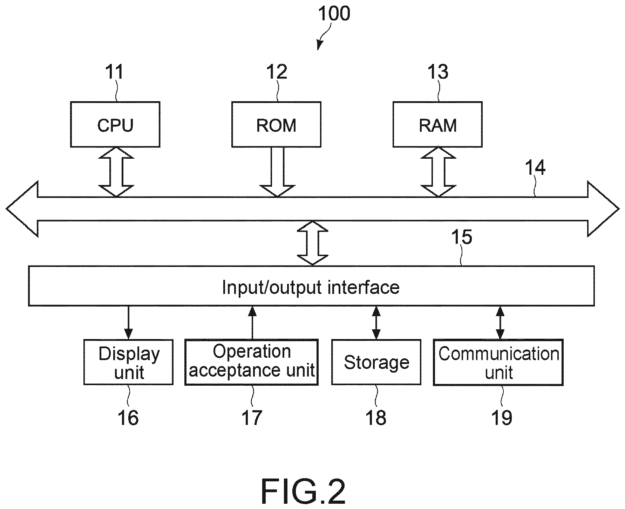

Fig. 2 illustrates a hardware configuration of the program development server 100. As illustrated in the figure, the program development server 100 includes a central processing unit (CPU) 11, a read only memory (ROM) 12, a random access memory (RAM) 13, an input/output interface 15, and a bus 14 through which these components are connected to one another.

The CPU 11 accesses, for example, the RAM 13 as appropriate when necessary, and comprehensively controls the entirety of respective blocks of the program development server 100 while performing various arithmetic processes. The ROM 12 is a nonvolatile memory that statically stores therein firmware, such as an OS, a program, and various parameters, that is executed by the CPU 11. The RAM 13 is used as, for example, a work region for the CPU 11, and temporarily holds an OS, various applications that are being executed, and various pieces of data that are being processed.

For example, a display unit 16, an operation acceptance unit 17, a storage 18, and a communication unit 19 are connected to the input/output interface 15.

The display unit 16 is a display device that uses, for example, a liquid crystal display (LCD) or an organic electroluminescence display (OELD). In the present embodiment, the display unit 16 does not necessarily have to be provided since the 3D display device 110 is provided separately from the program development server 100. When the program development server 100 is integrated with the 3D display device 110, the display unit 16 displays a 3D image of, for example, the three-dimensional object.

Examples of the operation acceptance unit 17 include a pointing device such as a mouse, a keyboard, a touch panel, and other input devices. When the operation acceptance unit 17 is a touch panel, the touch panel may be integrated with the display unit 16.

Examples of the storage 18 include a nonvolatile memory such as a hard disk drive (HDD), a flash memory (a solid-state drive; SSD), and other solid-state memories. The storage 18 stores therein the OS, the various applications, and the various pieces of data described above. In particular, in the present embodiment, the storage 18 stores therein a program and data for, for example, an application necessary to perform processing that includes arranging at least a portion of the image processing program 210 of the camera 200 on a three-dimensional object together with profile information, outputting them to the 3D display device 110, and instructing the camera 200 to change the image processing program 210, according to a gesture of a user (a change operation).

Examples of the communication unit 19 include a network interface card (NIC) for Ethernet, various modules for wireless communication such as a wireless LAN, and other communication interfaces, and the communication unit 19 performs processing of communication among the 3D display device 110, the gesture-input-and-recognition device 120, and the camera 200. In other words, the communication unit 19 serves as an output unit that outputs a three-dimensional object generated by the CPU 11 to the 3D display device 110 and causes the 3D display device 110 to display the three-dimensional object.

Note that a basic hardware configuration of the camera 200 is substantially the same as the hardware configuration of the program development server 100, although this is not illustrated.

### [Operation of Computer-Program Development System]

Next, an operation of a computer-program development system that has the configuration described above, is described focused on an operation of the program development server 100. The operation of the computer-program development system is performed by the hardware of the program development server 100, such as the CPU 11 and the communication unit 19, cooperating with the software stored in the storage 18. In the following descriptions, for convenience, it is assumed that the CPU 11 is primarily involved in performing the operation.

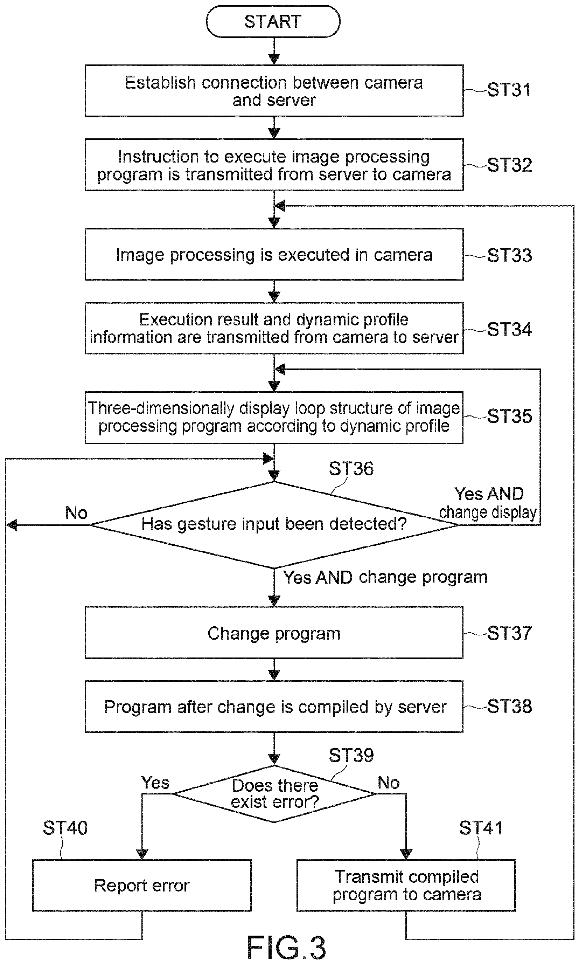

Fig. 3 is a flowchart of a procedure of the operation of the computer-program development system.

First, the program development server 100 establishes a connection with the camera 200 through the communication interface described above.

Next, the CPU 11 of the program development server 100 transmits, to the camera 200, an instruction to execute (to start to run) the image processing program 210 (Step 32). This execution is, for example, an execution of a loop structure of the image processing program 210.

The camera 200 that has received the execution instruction described above executes (a loop structure of) the image processing program 210 using the calculator 220 (Step 33).

Next, the camera 200 transmits a result of executing the image processing program 210 and dynamic profile information regarding the image processing program 210 (Step 34). Here, the dynamic profile information includes, for example, an execution time for the loop structure, and the utilization and the power consumption of the calculator 220 upon the execution, but is not limited to them.

According to the execution result and the dynamic profile information (running data), the CPU 11 of the program development server 100 that has received the execution result and the dynamic profile information causes the 3D display device 110 to three-dimensionally display the image processing program 210 in the form of a three-dimensional object (Step 35).

In this case, the CPU 11 may display the execution result and dynamic profile information on the three-dimensional object with no change, or may generate analysis data obtained by analyzing the execution result and the dynamic profile information and may display the analysis data on the three-dimensional object.

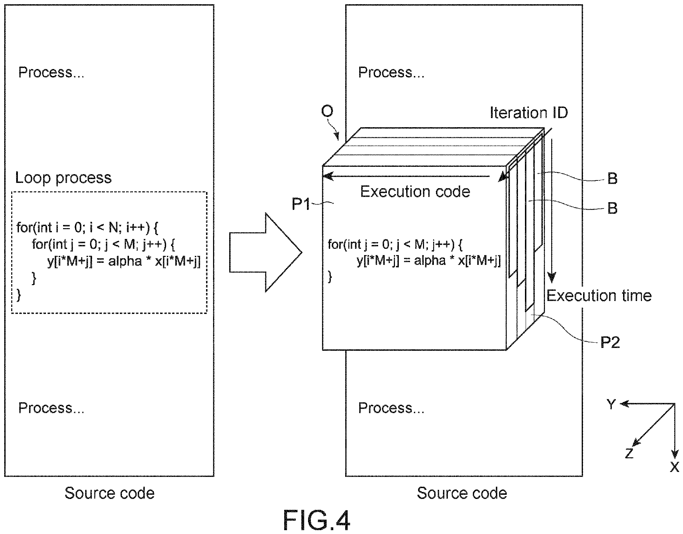

Fig. 4 illustrates an example of the three-dimensional object being displayed by the program development server 100.

As illustrated in the figure, the program development server 100 displays a three-dimensional object O on which code in a portion of a loop process is displayed, the loop process being a process from among a plurality of processes included in source code of the image processing program 210. The three-dimensional object O has, for example, a rectangular-parallelepiped (cube) shape, but the shape of the three-dimensional object O is not limited to this.

The three-dimensional object O has a structure including a plurality of rectangular parallelepipeds stacked in a predetermined direction (a Z direction). The code in the portion of a loop process is displayed on a face P1 that is orthogonal to a direction of the stacking (the Z direction).

Each of the stacked rectangular parallelepipeds corresponds to a single loop process included the image processing program 210.

Further, an execution result and dynamic profile information with respect to each of the loop processes, or information obtained by analyzing the execution result and the dynamic profile information is displayed on a face P2 (for example, a face extending toward a depth direction) from among four lateral faces that are parallel to the direction of the stacking (the Z direction) of the three-dimensional object O.

Specifically, on the face P2, a direction of a Z axis in the figure corresponds to an iteration ID that identifies a loop process from among a plurality of loop processes included in the image processing program 210, and the Z axis corresponds to a temporal axis of the image processing program 210. Further, an execution-time bar B is displayed in a direction of an X axis of each rectangular parallelepiped in the figure, the execution-time bar B having a length corresponding to an execution time for a loop structure corresponding to an iteration ID.

The execution-time bar B is data generated by the program development server 100 using the execution result and execution-time information regarding an execution time for each loop structure, the execution-time information being included in the dynamic profile information, the execution result and the dynamic profile information being received from the camera 200.

As described above, using a plurality of faces of the three-dimensional object O, the program development server 100 enables a user to intuitively and easily grasp a state of a computer program and a running condition of the computer program, or an analysis result.

When the loop process has a nested structure (a multiple-loop structure), the program development server 100 identifies an outermost loop process and an innermost loop process using different iteration IDs, and independently displays these iteration IDs on the face P1.

Returning to Fig. 3, the CPU 11 of the program development server 100 determines whether the gesture-input-and-recognition device 120 detects a gesture of a user on the three-dimensional object O displayed by the 3D display device 110 (Step 36).

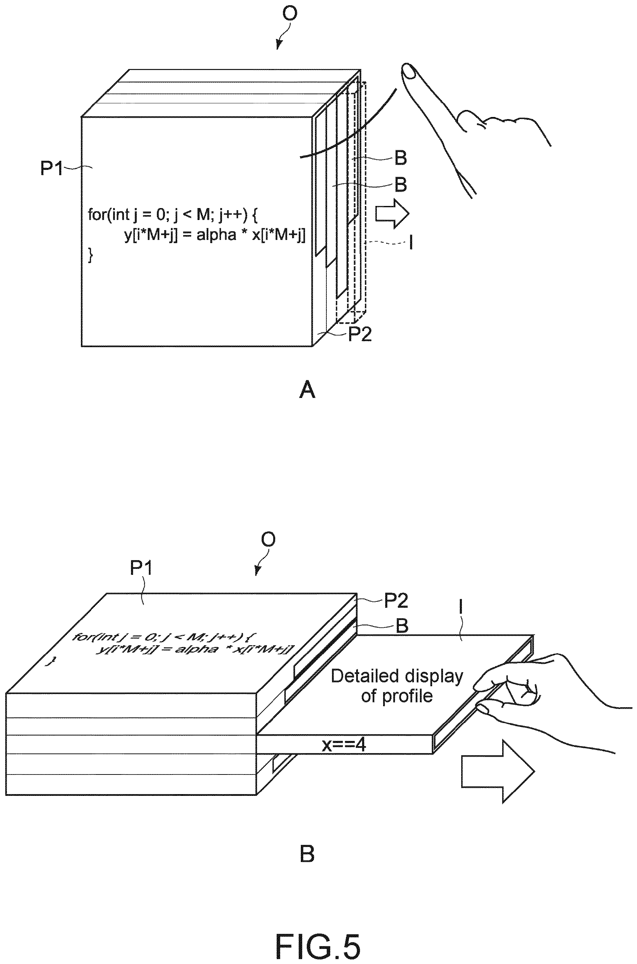

Fig. 5 illustrates a method for operating the three-dimensional object O.

As illustrated in A of the figure, when a user traces, with his/her finger, an iteration-ID axis (the Z axis in Fig. 4) on the face P2 of the three-dimensional object O, the program development server 100 recognizes this gesture using the gesture-input-and-recognition device 120. When the gesture is recognized, the program development server 100 causes the 3D display device 110 to perform display such that a plate iteration object I slightly protrudes in, for example, a direction indicated by an arrow in the figure (a direction of a Y axis in Fig. 4) as represented by broken lines, the iteration object I indicating a profile of an iteration ID corresponding to a position on the iteration-ID axis that is pointed with the finger of the user.

Here, the program development server 100 may cause the 3D display device 110 to display profile information regarding the iteration such that the information is transparently visible on, for example, a front face of an iteration object I corresponding to the pointed iteration ID.

Further, as illustrated in B of the figure, when the program development server 100 recognizes, using the gesture-input-and-recognition device 120, a user's gesture of taking the protruding iteration object I out of the three-dimensional object O with his/her finger, the program development server 100 moves the protruding iteration object I in a direction indicated by an arrow in the figure, and causes the 3D display device 110 to display the moved iteration object I. This enables the user to take an iteration object I indicating a desired iteration out of the three-dimensional object O.

Returning to Fig. 3, when the CPU 11 of the program development server 100 determines that the gesture-input-and-recognition device has detected a gesture of the user, and determines that the gesture is an operation of changing a state of displaying the three-dimensional object O, the CPU 11 changes the state of displaying the three-dimensional object according to the gesture. The operation of changing a display state is, for example, the above-described operation of tracing the face P2 over the iteration axis, an operation of holding and pulling a specific iteration object I with a finger, and an operation of changing (rotating) an orientation of displaying the three-dimensional object O (a face displayed in the front). According to these operations, the CPU 11 causes the 3D display device 110 to perform 3D display processing such as causing an iteration object I to slightly protrude from the three-dimensional object O, moving a specific iteration object I in the direction of the Y axis in Fig. 4, and rotating the three-dimensional object O (Step 35).

On the other hand, when the CPU 11 determines that a gesture of a user has been detected, and determines that the gesture is an operation of changing the image processing program 210, the CPU 11 changes the image processing program 210 according to the gesture. (Step 37).

Here, a specific example of changing the image processing program 210 is described. In the present embodiment, in a state in which a loop structure of the image processing program 210 has been taken out in the form of the iteration object I, it is possible to perform splitting, parallelization, unrolling, vectorization, and reordering as change operations for optimizing the loop structure. These change processes can be performed in a programing language such as "Halide", but are not limited to this. The processes are described below in the order described above.

### (Splitting Operation)

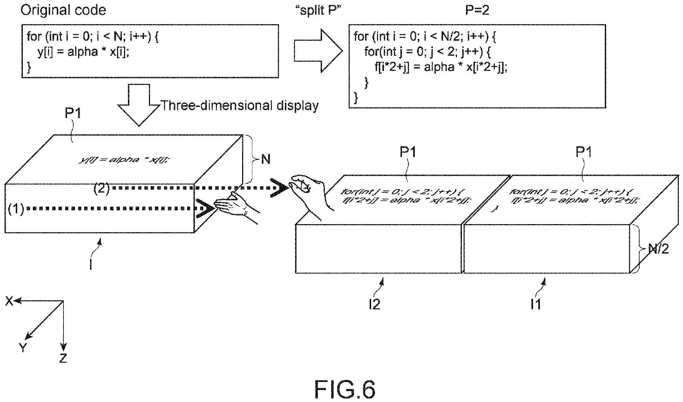

Fig. 6 illustrates an example of a splitting operation of a loop structure. This operation is a process of equally splitting a loop structure in the time direction.

As illustrated on the left in the figure, for example, an exact syntax in original code is displayed on, for example, an upper face P1 of the iteration object I.

Subsequently to this state, when, as indicated by an arrow (1) in the figure, a user's gesture of cutting, with his/her hand (in a chopping state), a lateral face (a face corresponding to the face P2 described above) of the iteration object I in a plane (an XY plane) that is parallel to the upper face P1 of the iteration object I, is recognized, the iteration object I is split into two plate iteration objects that are upper and lower iteration objects I1 and 12 to be displayed.

Subsequently to this state, when, as indicated by an arrow (2) in the figure, a gesture of holding the upper iteration object I1 of the two iteration objects obtained by the splitting, and of displacing the held upper iteration object I1 in a horizontal direction (to the right in the figure), is recognized, a splitting parameter P is adjusted to be determined according to the displacement amount.

In this case, exact syntaxes for respective loop structures after the splitting are respectively displayed on upper faces P1 of the respective iteration objects I1 and I2 obtained by the splitting.

In the example illustrated in the figure, the splitting parameter P is 2. In this case, when iteration is performed, from 0 to N, by the calculator 220 of the camera 200 on the original loop structure illustrated on the left in the figure, every N/2 of the iteration is transferred to the calculator 220 to be performed, due to the splitting operation. This results in eliminating a bottleneck since the number of registers used by the calculator 220 is reduced by half and an amount of access to a memory is reduced by half.

### (Parallelization Operation)

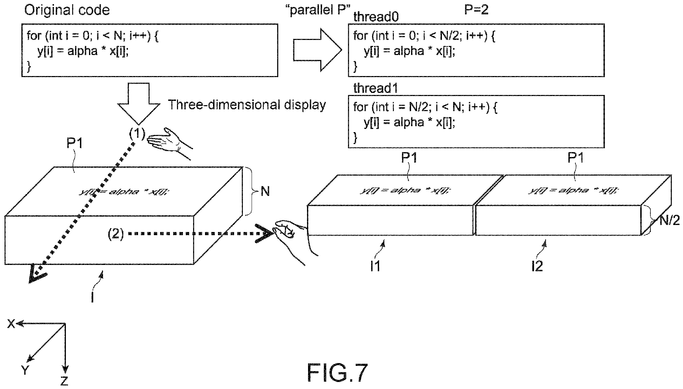

Fig. 7 illustrates an example of a parallelization operation of a loop structure. This operation is a process of multithreading a loop structure according to the multiple cores included in the calculator 220.

Subsequently to the state illustrated on the left in the figure, when, as indicated by an arrow (1) in the figure, a user's gesture of cutting, with his/her hand (in a chopping state), the upper face P1 of the iteration object I in a plane (a YZ plane) that is orthogonal to the upper face P1 of the iteration object I, is recognized, the iteration object I is split into two plate iteration objects that are left and right iteration objects I1 and I2 to be displayed.

Subsequently to this state, when, as indicated by an arrow (2) in the figure, a gesture of holding one of the two iteration objects obtained by the splitting, and of pulling to extend the held iteration object in the horizontal direction (to the right in the figure), is recognized, a parallelization parameter P is adjusted to be determined according to the pulling-and-extension amount.

In this case, exact syntaxes for respective loop structures (threads) after the parallelization are respectively displayed on upper faces P1 of the respective iteration objects I1 and I2 obtained by the parallelization.

In the example illustrated in the figure, the splitting parameter P is 2. In this case, each half of an object of the original loop structure illustrated on the left in the figure is executed by each core of the calculator 220, and thus the processing is optimized by the parallelization processing.

### (Unrolling Operation)

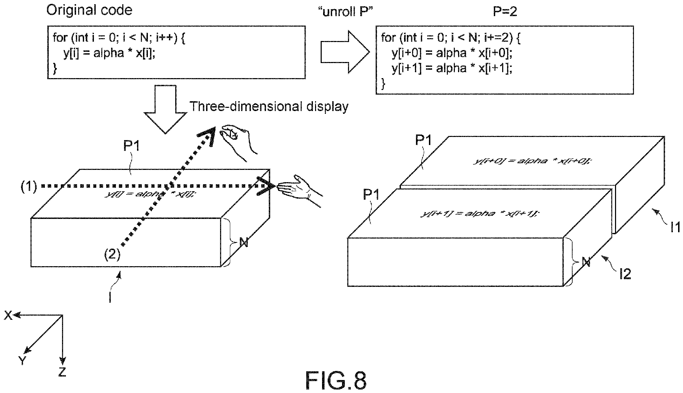

Fig. 8 illustrates an example of an unrolling operation of a loop structure. This operation is a process of unrolling a loop structure.

Subsequently to the state illustrated on the left in the figure, when, as indicated by an arrow (1) in the figure, a user's gesture of cutting, with his/her hand (in a chopping state), the upper face P1 of the iteration object I in a plane (a XZ plane)that is orthogonal to the upper face P1 of the iteration object I, is recognized, the iteration object I is split into two plate iteration objects that are front and rear iteration objects I1 and I2 to be displayed.

Subsequently to this state, when, as indicated by an arrow (2) in the figure, a gesture of holding one of the two iteration objects obtained by the splitting, and of pulling to extend the held iteration object in a rear direction (toward the rear in the Y direction), is recognized, a unrolling parameter P is adjusted to be determined according to the pulling-and-extension amount.

In this case, exact syntaxes for respective loop structures after the unrolling are respectively displayed on upper faces P1 of the respective iteration objects I1 and I2 obtained by the unrolling.

In the example illustrated in the figure, the splitting parameter P is 2. In this case, when the original loop structure illustrated on the left in the figure includes processing of repeating a loading-and-storing instruction and calculation, the loading-and-storing instruction is issued twice, and then the calculation is performed twice. This results in pipelining a loading-and-storing unit in the calculator 220, and thus results in a low latency.

### (Vectorization Operation)

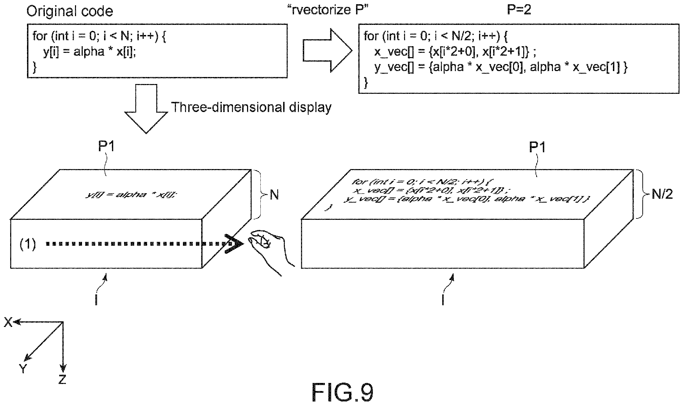

Fig. 9 illustrates an example of a vectorization operation of a loop structure. This operation is a process of unrolling a loop structure into a state in which a vector operation is usable.

Subsequently to the state illustrated on the left in the figure, when, as indicated by an arrow (1) in the figure, a user's gesture of holding the iteration object I and pulling to extend the held iteration object in the horizontal direction (to the right in the figure), is recognized, a vectorization parameter P is adjusted to be determined according to the pulling-and-extension amount.

In this case, a loop structure after the vectorization is displayed on an upper face P1 of the iteration object I obtained by the vectorization.

### (Reordering Operation)

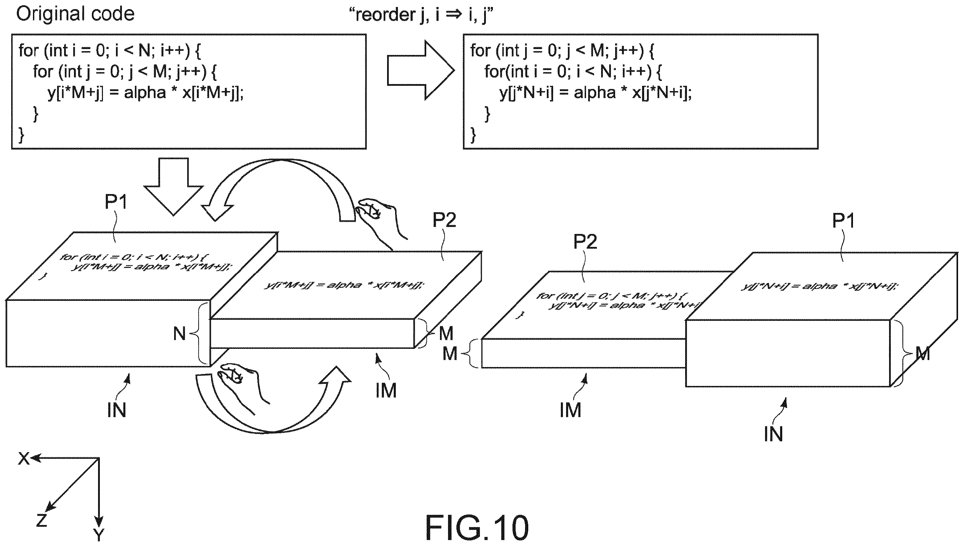

Fig. 10 illustrates an example of a reordering operation of a loop structure. This operation is a process of changing the order of loops when the loop structure is a nested structure.

When, as illustrated on the left in the figure, the loop structure is a nested structure, an iteration object IM corresponding to an inner loop structure is displayed on the right side of an iteration object IN in the form of a plate thinner than the iteration object IN, the iteration object IN corresponding to an outer loop structure. Further, only the outer loop structure from among the original loop structure is displayed on an upper face P1 of the iteration object IN, and only (an exact syntax of) the inner loop structure is displayed on an upper face P2 of the iteration object IM.

Subsequently to this state, when, as indicated by arrows in the figure, a use's gesture of holding both the iteration object IN and the iteration object IM and switching their positions, is recognized, the display positions of the iteration object IN and the iteration object IM are switched, as illustrated on the right in the figure.

Further, the inner loop structure before the operation is displayed, as an outer loop structure, on the upper face P1 of the iteration object IM after the operation, and (an exact syntax of) the outer loop structure before the operation is displayed, as an inner loop structure, on the upper face P1 of the iteration object IN.

In the example in the figure, a loop structure regarding a variable j is arranged externally and a loop structure regarding a variable i is arranged internally before the operation is performed, whereas the loop structure regarding the variable i is arranged externally and the loop structure regarding the variable j is arranged internally after the operation is performed.

Before the respective change operations described above are performed, the CPU 11 causes information to be displayed together with a specific iteration object I when the iteration object I is taken out of the three-dimensional object O due to a user's operation, the information indicating which of the respective change operations described above is possible with respect to a loop structure corresponding to the iteration object I.

Specifically, the CPU 11 determines which of the respective change operations described above is possible with respect to an iteration corresponding to an iteration object I that is being displayed. Then, the CPU 11 causes certain information to be displayed as information regarding a change operation determined to be possible and a method for performing the operation, the certain information indicating a direction of performing cutting with a hand in each of the change operations described above and indicating a position of a cutting plane (information indicating which change operation is possible by how cutting is performed in which plane).

This enables a user to intuitively grasp which change process is possible, and this results in avoiding user's unproductive consideration with respect to an impossible change process.

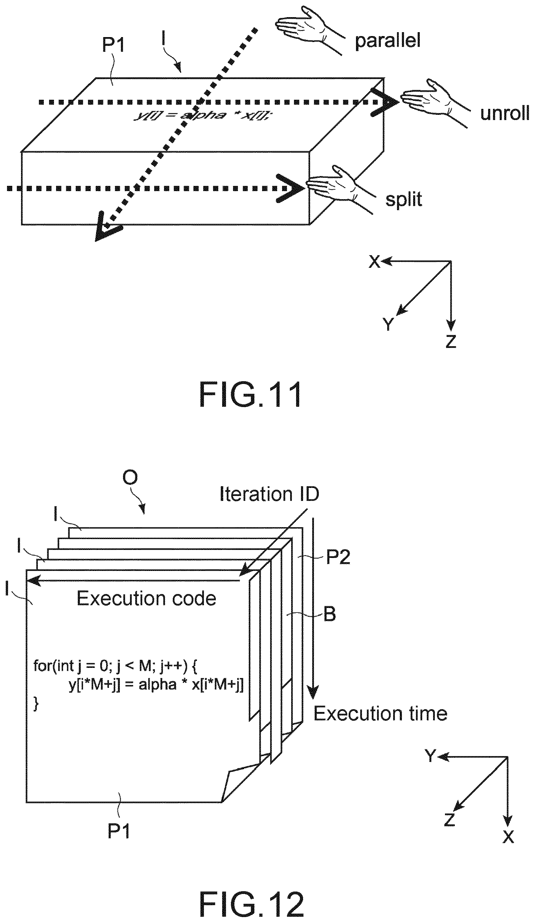

Fig. 11 illustrates an example of displaying a method for performing the change operations. The respective above-described change operations of splitting, parallelization, and unrolling that are performed with respect to a loop structure corresponding to the iteration object I, each include two operations. When the CPU 11 determines that these changes can be performed, the CPU 11 displays, on the iteration object I, information indicating an operation method related to an operation to be firstly performed, and when the CPU 11 determines that the first operation has been performed, the CPU 11 displays, on the iteration object I, information indicating an operation method related to an operation to be subsequently performed. The figure illustrates an example of displaying information indicating the operation method related to an operation to be firstly performed.

For example, when the CPU 11 determines that the parallelization operation is possible, the CPU 11 displays "parallel", which is information indicating that parallelization can be performed, and displays image information on an upper face P1 of an iteration object I on which the operation is to be performed, the image information being an image of an arrow in the Y direction in the figure with a hand (chopping), as illustrated in the figure. Further, when a user's gesture of cutting the upper face P1 according to the displayed pieces of information is recognized, the CPU 11 displays, near one of the two iteration objects I1 and I2, image information that is an image of the arrow with the hand (in a holding state) in (2) of Fig. 7, in order to determine a parallelization parameter P.

When a user's gesture of cutting the iteration object I is recognized, the CPU 11 determines, according to the position of a cutting plane and the cutting direction, which of the change operations the gesture corresponds to. Further, when a user's gesture of holding the iteration object I and pulling to extend the held iteration object I, the CPU 11 determines, according to the pulling-and-extension direction, which of the change operations the gesture corresponds to.

When each of the change operations described above is performed, the CPU 11 causes the 3D display device 110 to perform the 3D display processing described above, and transmits, to the camera 200, an instruction to change original code so that the code is changed, the instruction being an instruction depending on the performed change operation.

The respective change operations described above may each be independently performed, or may be combined to be successively performed.

Returning to Fig. 3, when the image processing program 210 is changed due to the gesture described above, the CPU 11 of the program development server 100 compiles the image processing program after the change (Step 38).

Then, the CPU 11 determines, by performing the compiling, whether an error has occurred (Step 39).

When the error has been detected by performing the compiling (Yes), the CPU 11 displays, for example, the error in an AR space together with the iteration object I, using the 3D display device 110 (Step 40).

On the other hand, when the error has not been detected by performing the compiling (No), the CPU 11 transmits the compiled program to the camera 200 to give an instruction to change the image processing program 210 (Step 41).

After that, the program after the change is executed in the camera 200 (Step 33), and the subsequent processes are repeated.

In related art, only statistical information regarding an iteration of a loop structure can be displayed, which results in being unable to analyze a processing amount and a profile for each iteration. Further, the mere display of code of each iteration results in difficulty in grasping a difference between iterations, since there is too much information. Consequently, it is difficult to analyze a bottleneck. In addition, if a bottleneck is found, a program developer will perform, according to the cause, several approaches, such as loop unrolling and loop splitting, by trial and error. However, a modification to a program is more complicated if the program is more complicated.

In the present embodiment, as described above, the program development server 100 uses a three-dimensional object O and an iteration object I to three-dimensionally display, on the objects, a loop structure, and the running data or the analysis data, and this results in being able to perform tuning in detail for each iteration of a loop structure, and to perform trial and error regarding the tuning.

Further, since the use of a 3D display makes it possible to intuitively understand a loop structure, the present technology may be applied not only as a technology for a program developer, but also as an educational tool used by children to learn a program (a loop structure).

### [Modification]

The present technology is not limited to the embodiment described above, but various modifications may be made thereto without departing from the scope of the present disclosure.

In the embodiment described above, it is assumed that the three-dimensional object O has a rectangular-parallelepiped shape, but the shape of the three-dimensional object O is not limited to a rectangular parallelepiped. For example, as illustrated in Fig. 12, the three-dimensional object O may have a structure including a plurality of stacked paper objects. In this case, the papers correspond to respective iterations. Regarding the execution-time bar B indicating an execution time for each iteration, it is similar to the case of the embodiment described above.

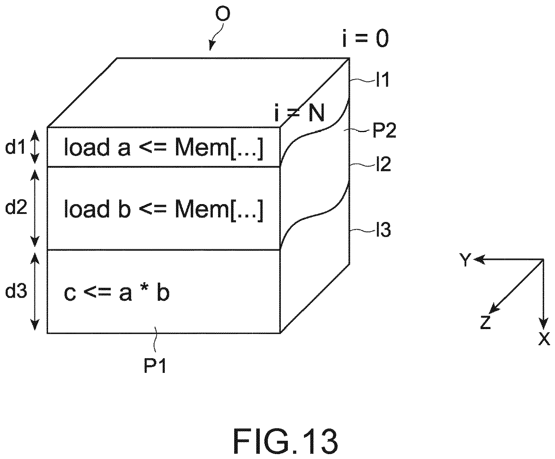

Further, in the embodiment described above, code of each loop structure is displayed on one face, the face P1. However, as illustrated in Fig. 13, the program development server 100 may split, in an up-and-down direction (the X direction), the face P1 into rectangular parallelepiped objects (L1, L2, and L3) for each line of execution code, and may display the objects in a state of being stacked. In this case, the program development server 100 may recognize an execution time for an instruction in each line from the received execution result and the received dynamic profile information, and may perform display such that lengths (d1, d2, and d3) of the respective objects in the X direction are proportional to the respective execution times for an instruction in a line. This enables a user to grasp which instruction of which iteration is delayed.

In the embodiment described above, the program development server 100 may add some index information (annotation information) such as a sticky image to a portion on the face P2 of the three-dimensional object O, and may perform display, the portion being a rectangular parallelepiped corresponding to an iteration to be noted, such as an iteration of a long execution time. In this case, the program development server 100 may perform control such that, with respect to an iteration of a portion with index information, it is possible to take out an iteration object I and to perform the respective change operations, as described above, and with respect to the other iterations, it is impossible to take out an iteration object I or to perform the respective change operations.

In the embodiment described above, the three-dimensional object O and the iteration object I are operated with the hand of a user. The method of operation performed with a hand is not limited to the methods described above (such as chopping, holding, and pulling and extension). Further, the three-dimensional object O and the iteration object I may be operated by a method other than the method performed with the hand of a user. For example, an operation tool box that includes, for example, scissors and a holding tool and makes it possible to perform the operations such as cutting, holding, and pulling and extension described above, may be provided in the program development server 100, and the program development server 100 may display the operation tool box together with the three-dimensional object O and the iteration object I. Then, the program development server 100 may accept the respective change operations described above according to a user's selection of a tool from the tool box and according to a user's subsequent operation.

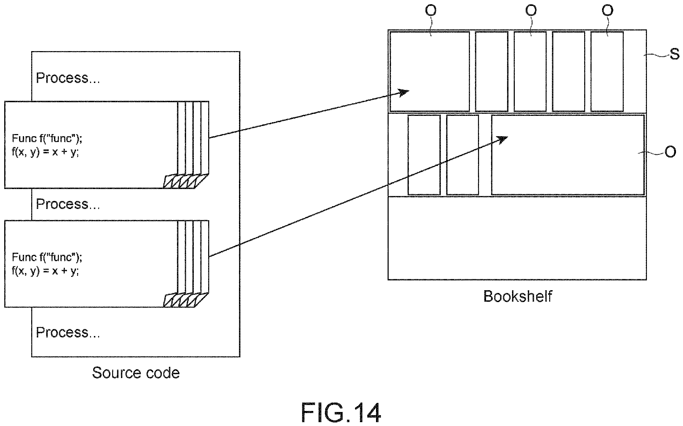

In the embodiment described above, an iteration object I corresponding to each iteration of a loop structure is taken out of the three-dimensional object O having a stacking structure, and is operated. However, as illustrated in Fig. 14, the three-dimensional object O may be depicted in the form of a book having a plurality of pages each having a corresponding iteration, and may be arranged, in a three-dimensional space, in an image (a bookshelf image S) indicating a bookshelf.

In this case, as illustrated in the figure, the program development server 100 arranges respective books (iteration objects I) in the bookshelf image S such that the face P2 corresponds to a backbone of the book.

The thickness of each book (the number of pages; the area of the backbone) is proportional to an execution time for each loop structure (or the number of loops). Further, an execution time and the number of execution cycles with respect to an instruction described for each page are plotted on the backbone of a book, and this enables a user to intuitively grasp how long it takes to perform execution for each page. An instruction with respect to a corresponding loop counter is described on each page of each book.

A user can take one of the books (the three-dimensional objects O) out of the bookshelf image using, for example, a holding gesture, or can take out a sequence of instructions and a profile with respect to a specific loop counter using a gesture of turning a page.

In this case, when the program development server 100 detects a user's operation of selecting one of the plurality of books (the three-dimensional objects O) arranged in the bookshelf, the program development server 100 sets, to be a target of the change operation, code displayed on the face P1 that corresponds to each page of the selected three-dimensional object O.

Then, when the program development server 100 recognizes a user's gesture of, for example, dividing a specific page set to be the operation target, or pulling to extend the specific page, or changing pages, the program development server 100 accepts the respective change operations of splitting, parallelization, unrolling, vectorization, and reordering, and instructs the camera 200 to perform a change, as in the case of the embodiment described above.

In this case, the program development server 100 may cause images of books and a bookshelf to be displayed such that a book corresponding to an optimization-target loop structure (for example, a loop structure of a long execution time) from among a plurality of loop structures, slightly protrudes from the bookshelf, or such that only an optimization-target loop structure from among a plurality of loop structures is arranged in the bookshelf.

As described above, the depiction of a loop structure in the form of a book having a thickness that is proportional to an execution time, enables a user to grasp the contribution of each iteration to the execution time and the priority of tuning. Further, the user can easily pick up a tuning point (loop structure) since the tuning point is organized in the bookshelf.

In the embodiment described above, the camera 200 is provided as a computer on which a development-target computer program has been installed. However, the computer may be a personal computer (PC); a smartphone; a tablet terminal; VR glasses, a head-mounted display, and other VR devices; a smartwatch and other wearable terminals; a game device; a TV device; a personal video recorder (PVR); an audio player; an electronic book; and any other electronic apparatuses.

When the development-target computer program is an application program that runs on a VR device, a loop structure in the application program may be changed and optimized as in the case of the embodiment described above. In this case, a calculator of the VR device itself performs the process of displaying a three-dimensional object O and the process of accepting a user's operation of changing a program, the processes being performed by the program development server 100 by the gesture-input-and-recognition device and the 3D display device cooperating with each other in the embodiment described above. In this case, a computer (a server) that performs processing occurring in a development environment may be separately provided, the processing including a change in a program, building of the program, and a calculation necessary to analyze a profile of the program, and the computer may communicate, for example, profile information with the VR device.

When the development-target computer program is an application program for a VR computer game, a loop structure in the VR application may be changed and optimized as in the case of the embodiment described above. In this case, a display for a target game play is provided in a VR space. As in the case of the embodiment described above, the VR device changes (a loop structure of) a program due to a gesture of a user and terminates the change task. Then, the VR device plays back the game after the change and causes the display to display the game.

Likewise, when the development target is the application program for a VR computer game described above, a laboratory may be provided in the game, and an interface for the optimization of a program described in the embodiment described above may be provided in the laboratory. Regarding the VR device, a user enters the laboratory during playing the game. As in the case of the embodiment described above, the user changes a program using a gesture and terminates the change task. Then, the user exits from the laboratory, and the game after the change is played back outside the laboratory. In this case, the user can control the game program by holding a game controller (or a controller for VR) in his/her hands to manipulate the controller.

When the development-target computer program is a 3D modeling shader program, a loop structure in the shader program may be changed and optimized as in the case of the embodiment described above. In this case, a 3D model that is being designed is displayed in a VR/AR space. As in the case of the embodiment described above, a user changes the shader program using a gesture and terminates the change task. Then, the 3D model that is being displayed in the VR/AR space is updated.

When the development-target computer program is a recognition processing program for AR glasses, a loop structure in the recognition processing program may be changed and optimized as in the case of the embodiment described above. In this case, recognition processing is performed in a state in which a user wears AR glasses. In the program, a developer mode is provided, the developer mode being a mode in which an operation of changing a program that is similar to one of the operations of the embodiment described above is possible, and it is possible to perform the change by the state being changed to the developer mode during the AR glasses performing the recognition processing. The user changes the recognition processing program using a gesture and terminates the developer mode, and then the recognition processing is restarted by the program after the change.

When the development-target computer program is a multiplayer VR application program, that is, when multiple users share the same VR space through a network, a loop structure in the VR application program of each user may be changed and optimized as in the case of the embodiment described above. In this case, there exists a plurality of computers (profiling-target computers that are profiled) each having a tuning-target VR application program, and a different computer (a profiling computer that performs profiling) that corresponds to the program development server 100 in the embodiment described above also shares the same VR space. When the profiling computer recognizes a specific gesture of a user of the profiling computer, the state is changed to an operation of changing a program that is similar to one of the operations of changing a program in the embodiment described above, the specific gesture being a gesture of, for example, talking to another user or patting the shoulder of the other user when the user of the profiling computer recognizes the other user, the other user being a user who is likely to have some problem such as a user who is moving slowly or moving clumsily. The change in the VR application program may be synchronically applied to a VR application of a profiling-target computer that is other than the profiling computer and shares the VR space. In this case, the change may be applied to all of the VR applications of the other computers sharing the VR space, or may be selectively applied to a VR application of a specific other computer by, for example, a specific gesture of the user of the profiling computer (such as holding his/her hand out, or pointing with his/her finger) being recognized.

When the development-target computer program is an on-board simulation program for an advanced driver assistance system (ADAS), a loop structure in the program for ADAS may be changed and optimized as in the case of the embodiment described above. Here, it is assumed that simulation is performed with respect to an ADAS that is being tested before the ADAS is installed in an actual vehicle. In this case, the program for ADAS includes a simulation-execution mode and a developer mode, and it is possible to perform, in the developer mode, an operation of changing a program that is similar to one of the operations of changing a program in the embodiment described above. A computer for ADAS changes the state of the program for ADAS from the simulation-execution mode to the developer mode, changes the program for ADAS due to a gesture of a user, and returns the state to the simulation mode. Then, simulation is performed by the program after the change.

Further, in addition to the application to onboard simulation, the present technology is applicable to all of the fields, such as the field of surgical robot or factory automation (FA) for medical use, for which software is necessary to be developed on the basis of simulation since it is not easy to provide actual equipment, or since even if actual equipment is provided, there will be a risk or it will be necessary to consider, for example, costs incurred when the actual equipment gets broken.

When the development-target computer program is a program for controlling and recognizing a robot, a loop structure in the program for controlling and recognizing a robot may be changed and optimized as in the case of the embodiment described above. The program for controlling and recognizing a robot is used in a simulated-competition game of a robotics competition in an AR space, the robotics competition being a robotics competition, such as RoboCup, ROBOCON (robot contests), and Micromouse, in which actual equipment (a robot) is used in related art. In this case, a laboratory may be provided in the competition game, and an interface for the optimization of a program described in the embodiment described above may be provided in the laboratory. Regarding a computer that includes the program for controlling and recognizing a robot, a user enters the laboratory during playing the game. As in the case of the embodiment described above, the user changes a program using a gesture and terminates the change task. Then, the user exits from the laboratory, and the competition is restarted outside the laboratory by the program after the change. Since winning or losing in such a competition game is attributed to controlling and recognizing of a robot in real time, the program tuning described above is a big factor in changing the characteristics of a game.

In the embodiment described above, a loop structure portion from among a computer program (the image processing program 210) is displayed as a three-dimensional object O, but a portion other than the loop structure portion may be displayed as the three-dimensional object O.

Regarding a technology disclosed as an "information processing method" from among the technologies disclosed in the claims of the present application, respective steps included in the information processing method are automatically performed by at least one device such as a computer, by information processing being performed by software, and the information processing method is not performed by a man using the device such as a computer. In other words, the "information processing method" is an information processing method performed by computer software, and is not a method by which a man operates a calculation tool that is a computer.

The present technology may also take the following configurations.
(1) An information processing apparatus including:
   an output unit configured to output data indicating a predetermined three-dimensional object having a face on which at least a portion of a computer program that runs on a computer is displayed; and
   a controller configured to instruct, according to a predetermined operation, the computer to perform a change in the computer program, the predetermined operation being performed by a user with respect to the three-dimensional object.
(2) The information processing apparatus according to (1), in which
   the controller controls the output unit to output, together with the data indicating the three-dimensional object, data indicating an operation method for changing the computer program.
(3) The information processing apparatus according to (1) or (2), in which
   the controller controls the output unit to output the data indicating the three-dimensional object in a three-dimensional space that is a space in which an operation is performed by the user.
(4) The information processing apparatus according to any one of (1) to (3), in which
   the controller recognizes a predetermined gesture of the user as the operation, and gives, according to the gesture, an instruction to perform the change.
(5) The information processing apparatus according to any one of (1) to (4), in which
   the controller instructs the computer to start to run the computer program, and analyzes running data of the computer program to generate analysis data, the running data being received from the computer.
(6) The information processing apparatus according to (5), in which
   the controller controls the output unit such that the computer program is displayed on a first face of the three-dimensional object, and the running data or the analysis data is displayed on a second face of the three-dimensional object, the second face being different from the first face.
(7) The information processing apparatus according to (5) or (6), in which
   the three-dimensional object has a structure including at least one rectangular parallelepiped stacked in a predetermined direction, and
   the controller controls the output unit such that the computer program is displayed on one of two faces from among faces of the rectangular parallelepiped, and the running data or the analysis data is displayed on one of four lateral faces from among the faces of the rectangular parallelepiped, the two faces being orthogonal to the predetermined direction, the four lateral faces being parallel to the predetermined direction.
(8) The information processing apparatus according to (7), in which
   the stacked rectangular parallelepiped corresponds to a single loop process of the computer program, and
   the controller controls the output unit such that data indicating an execution time for the single loop process is displayed on the one of four lateral faces as the running data or the analysis data.
(9) The information processing apparatus according to (2), in which
   the controller determines whether a change process performed with respect to the computer program is possible, the controller performing the determination with respect to a plurality of the change processes different from one another, and
   the controller controls the output unit to output, as the operation method, data indicating an operation method for the change process determined to be possible.
(10) The information processing apparatus according to (9), in which
   the controller gives, according to an operation of the user, an instruction to perform the change in the computer program, the operation of the user corresponding to the operation method for the change process determined to be possible, and
   the controller controls the output unit such that the three-dimensional object is deformed to be displayed according to a result of the change.
(11) The information processing apparatus according to (10), in which
   the change process is one of splitting, parallelization, unrolling, vectorization, or reordering of the computer program.
(12) The information processing apparatus according to (6), in which
   the three-dimensional object is in a form of a book, and
   the controller controls the output unit to output an image of a bookshelf in which a plurality of the three-dimensional objects is arranged in a three-dimensional space such that the second face corresponds to a backbone of the book.
(13) The information processing apparatus according to (12), in which
   when the controller detects a user's operation of selecting one of the plurality of the three-dimensional objects arranged in the bookshelf, the controller sets, to be a target of the change, the computer program displayed on the first face of the selected three-dimensional object.
(14) The information processing apparatus according to (13), in which
   the controller analyzes an execution time for the computer program as the running data, and controls the output unit such that the second face having an area corresponding to a length of the execution time is displayed.
(15) An information processing system including:
   a computer that includes
      a storage configured to store therein a computer program, and
      a first controller configured to change the computer program; and
   an information processing apparatus that includes
      an output unit configured to output data indicating a predetermined three-dimensional object having a face on which at least a portion of the computer program is displayed, and
      a second controller configured to instruct, according to a predetermined operation, the computer to perform a change in the computer program, the predetermined operation being performed by a user with respect to the three-dimensional object.
(16) An information processing method including:
   outputting data indicating a predetermined three-dimensional object having a face on which at least a portion of a computer program that runs on a computer is displayed; and
   instructing, according to a predetermined operation, the computer to perform a change in the computer program, the predetermined operation being performed by a user with respect to the three-dimensional object.
(17) A computer program production method including:
   outputting data indicating a predetermined three-dimensional object having a face on which at least a portion of a computer program that runs on a computer is displayed; and
   instructing, according to a predetermined operation, the computer to perform a change in the computer program, the predetermined operation being performed by a user with respect to the three-dimensional object.
(18) A program that causes an information processing apparatus to perform a process including:
   outputting data indicating a predetermined three-dimensional object having a face on which at least a portion of a computer program that runs on a computer is displayed; and
   instructing, according to a predetermined operation, the computer to perform a change in the computer program, the predetermined operation being performed by a user with respect to the three-dimensional object.

### Reference Signs List

- 11: CPU
- 19: communication unit
- 100: program development server
- 110: 3D display device
- 120: gesture-input-and-recognition device
- 200: camera
- 210: image processing program
- 220: calculator
- O: three-dimensional object
- I: iteration object
- B: execution-time bar
- S: bookshelf image
- P1, P2: face

## Claims

1. An information processing apparatus comprising:
an output unit configured to output data indicating a predetermined three-dimensional object having a face on which at least a portion of a computer program that runs on a computer is displayed; and
a controller configured to instruct, according to a predetermined operation, the computer to perform a change in the computer program, the predetermined operation being performed by a user with respect to the three-dimensional object.

2. The information processing apparatus according to claim 1, wherein
the controller controls the output unit to output, together with the data indicating the three-dimensional object, data indicating an operation method for changing the computer program.

3. The information processing apparatus according to claim 1, wherein
the controller controls the output unit to output the data indicating the three-dimensional object in a three-dimensional space that is a space in which an operation is performed by the user.

4. The information processing apparatus according to claim 1, wherein
the controller recognizes a predetermined gesture of the user as the operation, and gives, according to the gesture, an instruction to perform the change.

5. The information processing apparatus according to claim 1, wherein
the controller instructs the computer to start to run the computer program, and analyzes running data of the computer program to generate analysis data, the running data being received from the computer.

6. The information processing apparatus according to claim 5, wherein
the controller controls the output unit such that the computer program is displayed on a first face of the three-dimensional object, and the running data or the analysis data is displayed on a second face of the three-dimensional object, the second face being different from the first face.

7. The information processing apparatus according to claim 5, wherein
the three-dimensional object has a structure including at least one rectangular parallelepiped stacked in a predetermined direction, and
the controller controls the output unit such that the computer program is displayed on one of two faces from among faces of the rectangular parallelepiped, and the running data or the analysis data is displayed on one of four lateral faces from among the faces of the rectangular parallelepiped, the two faces being orthogonal to the predetermined direction, the four lateral faces being parallel to the predetermined direction.

8. The information processing apparatus according to claim 7, wherein
the stacked rectangular parallelepiped corresponds to a single loop process of the computer program, and
the controller controls the output unit such that data indicating an execution time for the single loop process is displayed on the one of four lateral faces as the running data or the analysis data.

9. The information processing apparatus according to claim 2, wherein
the controller determines whether a change process performed with respect to the computer program is possible, the controller performing the determination with respect to a plurality of the change processes different from one another, and
the controller controls the output unit to output, as the operation method, data indicating an operation method for the change process determined to be possible.

10. The information processing apparatus according to claim 9, wherein
the controller gives, according to an operation of the user, an instruction to perform the change in the computer program, the operation of the user corresponding to the operation method for the change process determined to be possible, and
the controller controls the output unit such that the three-dimensional object is deformed to be displayed according to a result of the change.

11. The information processing apparatus according to claim 10, wherein
the change process is one of splitting, parallelization, unrolling, vectorization, or reordering of the computer program.

12. The information processing apparatus according to claim 6, wherein
the three-dimensional object is in a form of a book, and
the controller controls the output unit to output an image of a bookshelf in which a plurality of the three-dimensional objects is arranged in a three-dimensional space such that the second face corresponds to a backbone of the book.

13. The information processing apparatus according to claim 12, wherein
when the controller detects a user's operation of selecting one of the plurality of the three-dimensional objects arranged in the bookshelf, the controller sets, to be a target of the change, the computer program displayed on the first face of the selected three-dimensional object.

14. The information processing apparatus according to claim 13, wherein
the controller analyzes an execution time for the computer program as the running data, and controls the output unit such that the second face having an area corresponding to a length of the execution time is displayed.

15. An information processing system comprising:
a computer that includes
a storage configured to store therein a computer program, and
a first controller configured to change the computer program; and
an information processing apparatus that includes
an output unit configured to output data indicating a predetermined three-dimensional object having a face on which at least a portion of the computer program is displayed, and
a second controller configured to instruct, according to a predetermined operation, the computer to perform a change in the computer program, the predetermined operation being performed by a user with respect to the three-dimensional object.

16. An information processing method comprising:
outputting data indicating a predetermined three-dimensional object having a face on which at least a portion of a computer program that runs on a computer is displayed; and
instructing, according to a predetermined operation, the computer to perform a change in the computer program, the predetermined operation being performed by a user with respect to the three-dimensional object.

17. A computer program production method comprising:
outputting data indicating a predetermined three-dimensional object having a face on which at least a portion of a computer program that runs on a computer is displayed; and
instructing, according to a predetermined operation, the computer to perform a change in the computer program, the predetermined operation being performed by a user with respect to the three-dimensional object.

18. A program that causes an information processing apparatus to perform a process comprising:
outputting data indicating a predetermined three-dimensional object having a face on which at least a portion of a computer program that runs on a computer is displayed; and
instructing, according to a predetermined operation, the computer to perform a change in the computer program, the predetermined operation being performed by a user with respect to the three-dimensional object.
